# EUROPEAN PATENT APPLICATION

(11) **EP 2 755 198 A1**
(43) Date of publication of application: **16.07.2014**
(21) Application number: 13195905.8
(22) Date of filing: 05.12.2013
(51) Int. Cl.: G09G 5/00, G06F 3/14

(54) **Host device, display device, method of controlling host device, and method of controlling display device with two wireless communication interfaces**

(30) Priority: 27.12.2012 US 201261746249 P; 29.05.2013 KR 20130061154
(71) Applicant: Samsung Electronics Co., Ltd, Gyeonggi-do 443-742 (KR)
(72) Inventor: Kim, Jong-myung, Gyeonggi-do (KR); Lee, Seung-pok, Gyeonggi-do (KR)
(74) Representative: Walaski, Jan Filip

(57) **Abstract**

A host device is provided which includes a graphic processor configured to generate video data to be displayed on a display device, a first communication interface configured to transmit the video data to the display device via a first wireless communication method, and a second communication interface configured to receive at least one of control information, which corresponds to a control command input through a touch screen, and status information of the display device from the display device, and to transmit the status information of the host device to the display device via a second wireless communication method.

## Description

The invention relates to a host device, a display device, a method of controlling the host device, and a method of controlling the display device, and more particularly, relates to a host device, a display device, a method of controlling the host device, and a method of controlling the display device, which may individually transmit and receive video data and control data using a plurality of wireless communication methods.

Recently, a device that performs operations and a device that displays the result of operations may be wirelessly connected to each other to improve the mobility of electronic devices. For example, a host device may transmit computed data, such as video processing data, to a display device using wireless communication technology, and the display device may display the received data.

According to the above-described devices, the host device may be at a fixed position, and the display device may be freely used within a range supported by wireless communication. Accordingly, the devices may have good mobility, and users may enjoy distinctive experiences.

However, in the related art, using only one wireless communication method with which the host device and the display device may perform data transmission and reception with each may cause the following problems.

First, in the case where high-speed data, such as videos, and low-speed data, such as control data, are transmitted together, interference may occur between the two kinds of data, and this may influence the resolution and performance of the video data.

Second, since the two devices may require individual power supply managements, a user should turn on the power supplies of the two devices individually in order to use the system, and even in the case of turning off the system, the user should turn off the power supplies of the two devices individually in the same manner. For example, in the case where the host device enters into a power saving mode, the display device may not be aware that the host device has entered into the power saving mode, and in this case, if the user performs any operation on the display device, the system may not operate, which may cause inconvenience.

The present invention provides a host device, a display device, a method of controlling the host device, and a method of controlling the display device, which may individually transmit and receive video data and control data using a plurality of wireless communication methods.

Additional features and utilities of the present invention will be set forth in part in the description which follows and, in part, will be obvious from the description, or may be learned by practice of the invention.

The foregoing and/or other features of the present invention may be achieved by providing a host device wirelessly connectable to a display device having a touch screen, the host device including a graphic processor configured to generate video data to be displayed on the display device, a first communication interface configured to transmit the video data to the display device via a first wireless communication method, and a second communication interface configured to receive at least one of control information, which corresponds to a control command input through the touch screen, and status information of the display device from the display device via a second wireless communication method, and to transmit status information of the host device to the display device via the second wireless communication method.

In an embodiment, the host device may include a plurality of operation modes, and the host device may further include a controller configured to control the first communication interface and the second communication interface so as to perform communication with the display device only via the second wireless communication method if an operation mode of the plurality of operation modes is a power saving mode.

In an embodiment, the controller may be configured to control the second communication interface so that the status information that corresponds to a changed operation mode of the host device may be transmitted to the display device via the second wireless communication method if the operation mode of the host device is or has been changed.

In an embodiment, the controller may be configured to change the operation mode of the host device to correspond to a changed operation mode of the display device if the status information, which indicates that the operation mode of the display device has been changed, is or has been received from the display device via the second wireless communication method.

In an embodiment, the status information of the display device may include information about a residual amount of energy of a battery of the display device, and the controller may be configured to change the operation mode of the host device to correspond to the information about the residual amount of energy if the information about the residual amount of energy is or has been received from the display device via the second wireless communication method.

In an embodiment, the first communication interface may be configured to transmit the video data and audio data that corresponds to the video data to the display device.

In an embodiment, the first wireless communication method may be at least one of WiFi (Wireless LAN), UWB (Ultra WideBand), WiDi (Wireless Display), WiHD (Wireless HD), WHDI (Wireless Home Digital Interface), Miracast, and Wigig (Wireless Gigabit Alliance).

In an embodiment, the second wireless communication method may be a communication method that consumes less power than the first wireless communication method.

In an embodiment, the second wireless communication method may be at least one wireless communication method of Bluetooth, Zigbee, and RF communication.

In an embodiment, the host device may further include a power signal transmitter configured to transmit a power signal for wirelessly charging a power of the display device.

An embodiment of the present inventive concept is directed to provide a display device wirelessly connectable to a host device including a first communication interface configured to receive video data from the host device via a first wireless communication method, a user interface having a touch screen and configured to display the video data received through the first communication interface, and a second communication interface configured to transmit at least one of control information, which corresponds to a control command input through the touch screen, and status information of the display device to the host device via a second wireless communication method, and to receive the status information of the host device from the host device via the second wireless communication method.

In an embodiment, the display device may include a plurality of operation modes, and the display device may further include a controller configured to control the first communication interface and the second communication interface so as to perform communication with the host device only via the second wireless communication method if an operation mode of the plurality of operation modes is a power saving mode.

In an embodiment, the controller may be configured to control the second communication interface so that the status information that corresponds to a changed operation mode of the display device may be transmitted to the host device via the second wireless communication method if the operation mode of the display device is or has been changed.

In an embodiment, the controller may be configured to change the operation mode of the display device to correspond to a changed operation mode of the host device if the status information, which indicates that the operation mode of the host device has been changed, is or has been received from the host device via the second wireless communication method.

In an embodiment, the display device may further include a battery unit configured to supply power to respective constituent elements of the display device, and the controller may be configured to control the second communication interface so that information about a residual amount of energy in the battery unit may be transmitted to the host device included in the status information of the display device.

In an embodiment, the first communication interface may be configured to receive audio data that corresponds to the video data together with the video data, and the user interface may be configured to display the video data and to output the audio data at the same time.

In an embodiment, the first wireless communication method may be at least one of WiFi (Wireless LAN), UWB (Ultra WideBand), WiDi (Wireless Display), WiHD (Wireless HD), WHDI (Wireless Home Digital Interface), Miracast, and Wigig (Wireless Gigabit Alliance).

In an embodiment, the second wireless communication method may be a communication method that consumes less power than the first wireless communication method.

In an embodiment, the second wireless communication method may be at least one of Bluetooth, Zigbee, and RF communication.

In an embodiment, the display device may further include a battery unit including a battery and configured to supply a power to respective constituent elements in the display device from the battery, and a power signal receiver configured to receive a power signal from the host device and to use the power signal to charge the battery.

An embodiment of the present inventive concept is directed to a host device connectable to a display device including a keyboard configured to receive a first input and a second input, a graphic processor configured to process video data, which corresponds to the first input, a first communication interface configured to transmit the video data, which is or has been processed by the graphic processor, to the display device via a first wireless communication method, and a second communication interface configured to transmit control data, configured to control the display device, to the display device via a second wireless communication method in response to the second input.

An embodiment of the present inventive concept is directed to a method of controlling a host device wirelessly connectable to a display device having a touch screen including generating video data to be displayed on the display device, transmitting the video data to the display device via a first wireless communication method, and receiving at least one of control information, which corresponds to a control command input through the touch screen, and status information of the display device from the display device via a second wireless communication method, wherein the transmitting and the receiving are concurrent.

In an embodiment, the host device may include a plurality of operation modes, and the method of controlling a host device may further include controlling operation states of the first wireless communication method and the second wireless communication method so as to perform communication with the display device only via the second wireless communication method if an operation mode of the plurality of operation modes is a power saving mode.

In an embodiment, the method of controlling the host device may further comprise transmitting the status information of the host device to the display device via the second wireless communication method, wherein the transmitting the video data and the transmitting the status information are concurrent.

In an embodiment, the transmitting the status information of the host device may include transmitting information about a changed operation mode of the host device to the display device via the second wireless communication method included in the status information of the host device if the operation mode of the host device is or has changed.

An embodiment of the present inventive concept is directed to a method of controlling a display device wirelessly connectable to a host device including receiving video data from the host device via a first wireless communication method, displaying the video data, and transmitting at least one of control information, which corresponds to a control command input through a touch screen of the display device, and status information of the display device to the host device via a second wireless communication method, wherein the receiving and the transmitting are concurrent.

In an embodiment, the method of controlling the display device may further comprise receiving the status information of the host device from the host device via the second wireless communication method, wherein the receiving the video and the receiving the status information are concurrent.

An embodiment of the present inventive concept is directed to a first wireless device including a communication interface configured to perform, in a first mode, a first communication, in accordance with a first wireless method, of a data signal with a second wireless device, to perform, in a second mode, the first communication, in accordance with a second wireless method, of the data signal with the second wireless device, and to perform, in the first mode and the second mode, a second communication, in accordance with the second wireless method, of a control signal with the second wireless device, and including an electronic processing element configured to control the communication interface.

In an embodiment, the communication interface may comprise a first communication interface configured to perform, in the first mode, the first communication, and a second communication interface configured to perform, in the second mode, the first communication, and to perform, in the first mode and the second mode, the second communication.

In an embodiment, the first wireless method may be a first wireless communication standard and the second wireless method may be a second wireless communication standard.

In an embodiment, the first communication may be only from the first wireless device to the second wireless device and the second communication may be both from the first wireless device to the second wireless device and from the second wireless device to the first wireless device.

In an embodiment, the second mode may consume less power than the first mode.

In an embodiment, the data signal may be a video data signal.

In an embodiment, a given communication performed in accordance with the first wireless method may be accomplished faster than the given communication performed in accordance with the second wireless method.

In an embodiment, the control signal may include at least one of a first information about an operation mode of the first wireless device, a second information about the operation mode of the second wireless device, and a third information about an amount of energy provided by a power source for at least one of the first wireless device and the second wireless device.

In an embodiment, the electronic processing element may be configured to set an operation mode of the first wireless device in response to at least one of a lack of performance of an operation by the first wireless device and an information in the control signal from the second wireless device that an operation mode of the second wireless device is or has been changed.

In an embodiment, the electronic processing element may be configured to set an operation mode of the second wireless device.

In an embodiment, the electronic processing element may be configured to set the operation mode of the second wireless device in response to an information about an amount of energy provided by a power source for the second wireless device.

In an embodiment, the electronic processing element may be configured to cause the control signal to the second wireless device to include an information that an operation mode of the first wireless device is or has been changed.

In an embodiment, an interference between the first communication and the second communication may be less when the first communication is in accordance with the first wireless method and the second communication is in accordance with the second wireless method than when the first communication and the second communication are in accordance with a common wireless method.

An embodiment of the present inventive concept is directed to a non-transitory computer-readable recording medium containing instructions which, when executed by an electronic processing element, cause the electronic processing element to perform a method including communicating, under a control of the electronic processing element and, if a first mode is in effect, in accordance with a first wireless communication standard, a data signal, communicating, under the control of the electronic processing element and, if a second mode is in effect, in accordance with a second wireless communication standard, the data signal, and communicating, under the control of the electronic processing element and, if one of the first mode and the second mode is in effect, in accordance with the second wireless communication standard, a control signal.

These and/or other features and utilities of the present invention will become apparent and more readily appreciated from the following description of the embodiments, taken in conjunction with the accompanying drawings of which:
FIG. 1 is a block diagram illustrating a configuration of an electronic system according to an embodiment of the inventive concept;
FIG. 2 is a block diagram illustrating an example of a configuration of a host device as illustrated in FIG. 1;
FIG. 3 is a block diagram illustrating an example of a configuration of a display device as illustrated in FIG. 1;
FIG. 4 is a diagram illustrating an example of an operation of an electronic system according to an embodiment of the inventive concept;
FIGS. 5 to 9 are views illustrating an example of an operation of an electronic system according to an embodiment of the inventive concept;
FIG. 10 is a flowchart illustrating an example of a control operation of a host device according to an embodiment of the inventive concept; and
FIG. 11 is a flowchart illustrating an example of a control operation of a display device according to an embodiment of the inventive concept.
FIG. 12 is a block diagram illustrating a configuration of an electronic system according to an embodiment of the inventive concept.

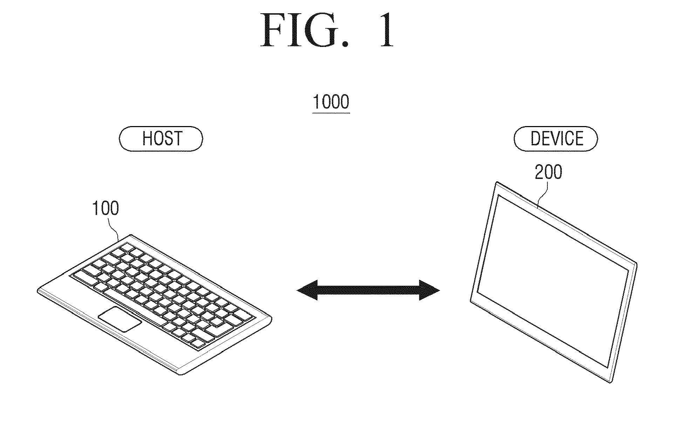

Referring to FIG. 1, the electronic system 1000 includes a host device 100 and a display device 200.

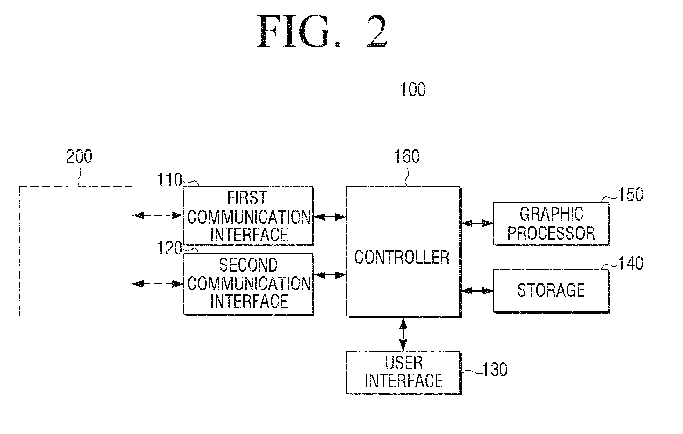

The host device 100 may generate video data to be displayed on the display device 200, and may transmit the generated video data to the display device 200 via a first wireless communication method. Further, the host device 100 may transmit control data of the host device 100 to the display device 200 and may receive control data of the display device 200 from the display device 100 via a second wireless communication method. Further, the host device 100 may perform communication with the display device 200 only in the second wireless communication method if the operation mode of the host device 100 is a power saving mode. The detailed operation and configuration of the host device 100 will be described later with reference to FIG. 2.

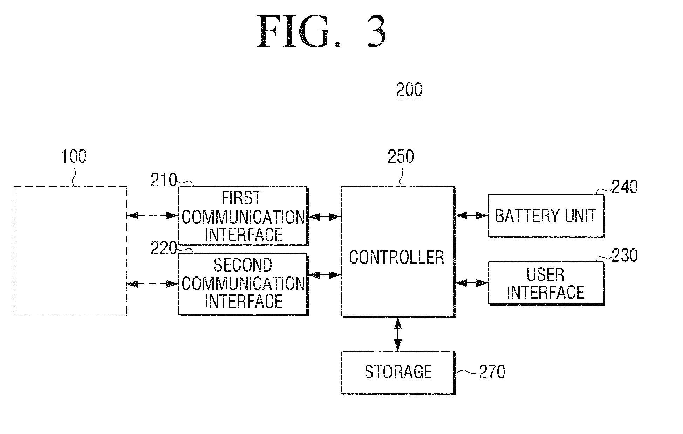

The display device 200 may be a device that may be subordinate to the host device 100, and may receive and display the video data transferred from the host device 100 via a wireless method. For example, the display device 200 may receive the video data from the host device 100 via the first wireless communication method, and may transmit the control data of the display device 200 to the host device 100 and may receive the control data of the host device 100 from the host device 100 via the second wireless communication method. Further, the display device 200 may perform communication with the host device 100 only via the second wireless communication method if the operation mode of the display device 200 is the power saving mode. The detailed operation and configuration of the display device 200 will be described later with reference to FIG. 3.

As described above, the electronic system 1000, according to an embodiment, may transmit and receive the video data and other data (except for the video data) in a separate manner via a plurality of wireless communication methods, and thus the deterioration in performance due to interferences between a high-speed signal and a low-speed signal may be minimized.

Further, the electronic system 1000, according to an embodiment, may perform communication between the host device 100 and the display device 200 via the second wireless communication method even in the power saving mode, and in response to a change of an operation state of one device, the operation state of the other device may be changed. Accordingly, a user may vary the operation states of both the host device 100 and the display device 200 in accordance with a power-on or a power-off operation of one device.

On the other hand, referring to FIG. 1, the electronic system 1000, for example, may be a detachable PC, and thus the display device 200 may subordinate to the host device 100. However, in implementation, the display device 200 may be able to operate independently. That is, an embodiment of the inventive concept may be realized in a device, such, for example, as a general tablet PC, a PMP, or a smart phone, also configured to operate as the display device 200.

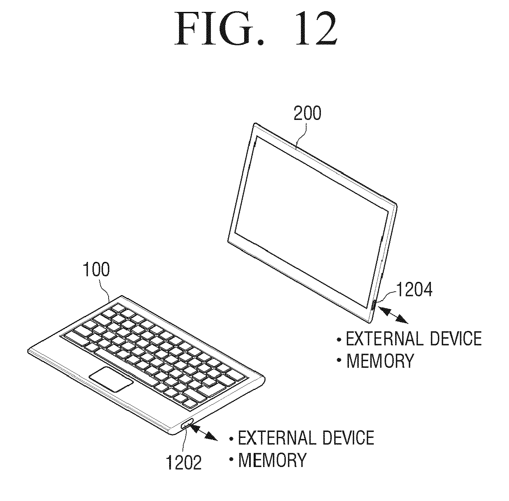

FIG. 12 is a block diagram illustrating a configuration of an electronic system according to an embodiment of the inventive concept. Referring to FIG. 12, the host device 100 may be configured with a terminal 1202 and the display device 200 may be configured with a terminal 1204. Terminal 1202, terminal 1204, or both may be configured to interact with an external device or a memory, such as, for example, a USB memory.

FIG. 2 is a block diagram illustrating an example of a configuration of the host device 100 as illustrated in FIG. 1.

Referring to FIG. 2, the host device 100 may include a first communication interface 110, a second communication interface 120, a user interface 130, a storage 140, a graphic processor 150, and a controller 160. The host device 100 may be a low end configuration except for, for example, a main body of a desktop PC in the related art and a display of a notebook PC in the related art.

In an embodiment, the host device 100 may have a plurality of operation modes. The plurality of operation modes may include a normal mode, in which all constituent elements in the host device 100 may operate, and a power saving mode, in which the host device 100 may operate with lower power consumption than in the normal mode. In an embodiment, the host device 100 may have only one power saving mode. However, the host device 100 may also include a plurality of power saving modes as operation modes.

The first communication interface 110 is configured to transmit data, for example, video data via the first wireless communication method. For example, the first communication interface 110 may transmit the video data generated by the graphic processor 150, to be described later, to the display device 200 via a high-speed wireless communication method, such as, for example, WiFi (Wireless LAN), UWB (Ultra WideBand), WiDi (Wireless Display), WiHD (Wireless HD), WHDI (Wireless Home Digital Interface), Miracast, or Wigig (Wireless Gigabit Alliance). In an embodiment, the first communication interface 110 may also transmit audio data to the display device 200 together with the video data.

The second communication interface 120 is configured to receive data, for example, a control command via the second wireless communication method. For example, the second communication interface 120 may receive, from the display device 200, an input user control command via the second wireless communication method.

The second communication interface 120 may transmit and/or receive, with the display device 200, the control data via the second wireless communication method. In an embodiment, the control data may be data, except for the video data and the audio data, which may be transmitted between the host device 100 and the display device 200, and may include a user control command input from the user on the display device 200 or the host device 100, a device control command that corresponds to the input user control command, status information of the host device 100, and status information of the display device 200.

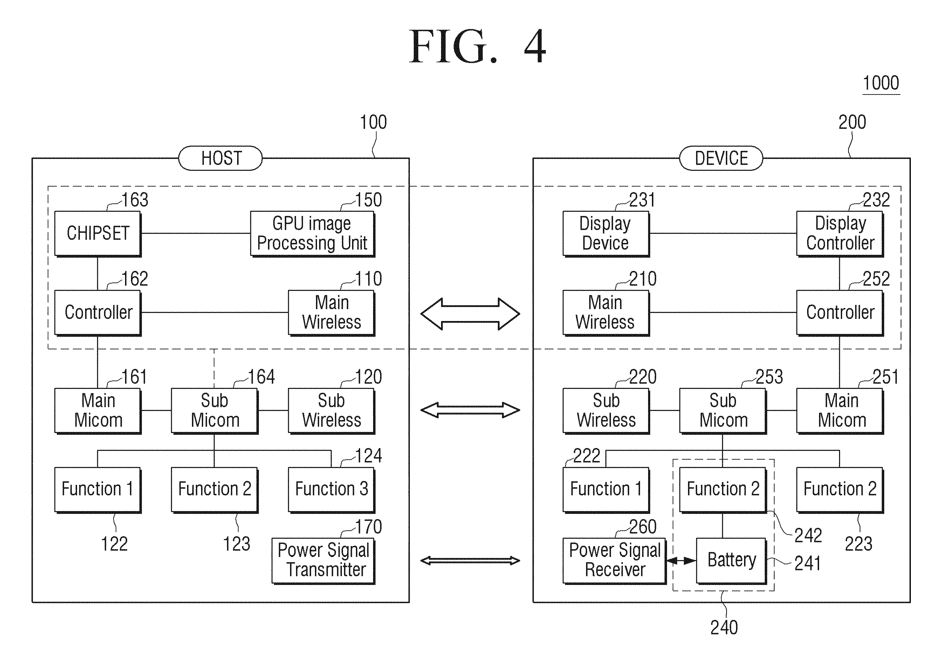

Accordingly, the second communication interface 120 may transmit and receive the status information of the host device 100 and the status information of the display device 200 via the second wireless communication method. In an embodiment, the status information, for example, may be information about the operation modes of the host device 100 and the display device 200 or the power supply state (for example, information about a residual amount of energy in a battery (see FIG. 4)) of the display device 200. The second wireless communication method may be a wireless communication method having a lower power, a lower speed, and a lower capacity than those of the first wireless communication method, and may be, for example, a Bluetooth, Zigbee, or RF communication method.

The user interface 130 may include a plurality of function keys for the user to set or to select various functions supported by the host device 100, and may display various kinds of information provided from the host device 100. The user interface 130 may be implemented as a device in which input and output operations are performed simultaneously, such as, for example, a touch screen (not illustrated), or may be implemented as a combination of an input device, such as, for example, a mouse (not illustrated) or a keyboard (not illustrated), and a display device, configured to display videos. In an embodiment, the user interface 130 may include a keyboard (not illustrated), and may receive an input of the user control command through the keyboard (not illustrated).

On the other hand, although an embodiment of the electronic system 1000, according to the inventive concept, may be configured to display videos through the display device 200, the host device 100 may be configured to display the same videos as those displayed on the display device 200 or different videos.

The storage 140 may store a program for driving the host device 100. For example, the storage 140 may store a program that may be a set of various commands that may be required to drive the host device 100. In an embodiment, the program may include not only application programs configured to provide specific services, but also an operating program configured to drive the application programs.

The storage 140, for example, may be implemented as a storage medium in the host device 100 or as an external storage medium such as, for example, a removable disk that includes a USB memory or a web server through a network.

The graphic processor 150 may generate the video data to be displayed on the display device 200. For example, the graphic processor 150 may generate the video data that corresponds to the user control command input through the display device 200. In an embodiment, the video data may be real-time streaming data.

On the other hand, in an embodiment, the graphic processor 150 may generate only the video data. However, the graphic processor 150 may also generate the audio data, and moving image streaming data that includes both the video data and the audio data.

The controller 160 may control the respective constituent elements of the host device 100. For example, the controller 160 may determine the operation mode of the host device 100. More specifically, for example, if there is not or has not been a user input for a predetermined time or if a job is not or has not been performed for the predetermined time, the controller 160 may determine the operation mode of the host device 100 to be the power saving mode. Further, if the status information, which indicates that the operation mode of the display device 200 has been changed to the power saving mode, is or has been received through the second communication interface 120, the controller 160 may determine the operation mode of the host device 100 to be the power saving mode. Additionally, the controller 160 may determine the operation mode of the host device 100 using any combination of the foregoing methods.

On the other hand, if a wakeup command is or has been received from the user through the user interface 130 in the power saving mode, or if the status information, which indicates that the operation mode of the display device 200 has been changed from the power saving mode to the normal mode, is or has been received through the second communication interface 120, the controller 160 may determine the operation mode of the host device 100 to be the normal mode. Although in an embodiment the operation mode of the host device 100 may be changed from the power saving mode to the normal mode or from the normal mode to the power saving mode, the controller 160 may change the operation mode in the same manner even in an embodiment where the operation mode of the host device 100 is changed from a power-off mode to the normal mode due to the user's power-on operation. Additionally, the controller 160 may determine the operation mode of the host device 100 using any combination of the foregoing methods.

Further, the controller 160 may determine the operation mode of the host device 100 as a function of a state of a battery (see FIG. 4) of the display device 200. For example, if the information about the residual amount of energy in the battery (see FIG. 4) of the display device 200 is or has been received through the second communication interface 120 as the status information and the residual amount of energy in the battery (see FIG. 4) is less than a predetermined residual amount, the controller 160 may determine the operation mode of the host device 100 to be the power saving mode. If the operation mode of the host device 100 is or has been changed to the power saving mode through the above-described determination and then the battery (see FIG. 4) of the display device 200 may achieve a charged state, the controller 160 may determine the operation mode of the host device 100 to be the normal mode. The information that the battery (see FIG. 4) of the display device 200 has been changed to a charged state may be received as the above-described status information. Additionally, the controller 160 may determine the operation mode of the host device 100 using any combination of the foregoing methods.

Then, the controller 160 may control the respective constituent elements of the host device 100 to correspond to the determined operation mode. For example, if the operation mode of the host device 100 is or has been changed to the power saving mode, the controller 160 may control the first communication interface 110 and the second communication interface 120 so that the communication with the display device 200 may be performed only via the second wireless communication method. That is, the controller 160 may control the first communication interface 110 not to operate and may control only the second communication interface 120 to operate. In an embodiment, the controller 160 may control the storage 140 and the graphic processor 150 not to operate. That is, in the power saving mode, the controller 160 may control the storage 140 and the graphic processor 150 not to consume power or to consume a low amount of power.

For example, if the user inputs a power-off command or a power saving mode entrance command through the user interface 130, the controller 160 may control the respective constituent elements of the host device 100 to be in the power state that corresponds to the power saving mode (or power-off mode). Further, the controller 160 may control the second communication interface 120 to provide notification that the operation mode of the host device 100 has been changed. If such information is or has been transmitted to the display device 200, the operation mode of the display device 200 may be changed to the power saving mode or the power-off mode. As described above, the host device 100, according to an embodiment, may transfer the changed state of the operation mode of the host device 100 to the display device 200 as the status information, and thus the user may collectively change the states of the host device 100 and the display device 200 through an operation of one device only.

If the operation mode of the host device 100 is or has been changed to the normal mode, the controller 160 may control the respective constituent elements in the host device 100 so that the constituent elements, which do not operate during the power saving mode, wake up.

Further, if the operation mode of the host device 100 is or has been changed, the controller 160 may control the second communication interface 120 so that the changed operation mode of the host device 100 may be transmitted to the display device 200 as the status information.

For example, if the wakeup command is or has been input from the user through the user interface 130 in a state where the host device 100 is in the power saving mode or the power-off mode, the controller 160 may control the host device 100 to wake up so that the operation mode of the host device 100 may be changed to the normal mode. That is, the controller 160 may control the host device 100 to boot. If the operating system stored in the storage 140 is or has been loaded to the memory to boot through the above-described process, the controller 160 may control the graphic processor 150 to generate video data through the booting process that corresponds to a window (not illustrated) of the user interface 130 supported by the operating system, and may control the first communication interface 110 to transmit the generated video data to the display device 200 via the wireless method.

At the same time, the controller 160 may transfer the change of the operation mode of the host 100 to the display device 200 through the second communication interface 120, and thus the display device 200 may also wake up without a separate operation by the user.

Then, if the user control command is or has been input through the user interface 130 (specifically, for example, the keyboard (not illustrated)), the controller 160 may control the graphic processor 150 to generate the video data that corresponds to the first user control command. Further, the controller 160 may control the first communication interface 110 to transmit the video data that is generated by the graphic processor 150 to the display device 200. On the other hand, if the user control command that is or has been input through the user interface 130 is the second user control command (e.g., an operation mode change command, such as, for example, a power-off command or a power-on command) configured to control the operation of the display device 200, the controller 160 may control the second communication interface 120 to transmit the control data that corresponds to the input second user control command to the display device 200.

Further, if the user inputs or has input a control command through the user interface 230 (specifically, for example, a touch screen (not illustrated)) provided on the display device 200, the display device 200 may transmit the input control command to the host device 100 as the control data. Accordingly, if the control data that corresponds to the user control command is or has been received from the display device 200 through the second communication interface 120, the controller 160 may control the graphic processor 150 to generate the video data that corresponds to the received user control command.

For example, if a command configured to reproduce a movie file that is stored in the host device 100 is or has been input through the user interface 130, the controller 160 may control the graphic processor 150 and the first communication interface 110 so that streaming video data for the movie file stored in the storage 140 may be generated and transmitted to the display device 200. If a video stop command is or has been input through the touch screen (not illustrated) provided on the display device 200 while the streaming video that corresponds to the movie file is displayed on the display device 200 through the above-described process, the display device 200 may transmit a video stop command to the host device 100 as the control data. In an embodiment, the host device 100 may control the graphic processor 150 and the first communication interface 110 to display the stopped video on a side of the display device 200 according to the input video stop command.

In the above-described embodiment, the streaming video may correspond to one content (or a result of driving one program). However, the streaming video may also be a result of a plurality of content. For example, the user may simultaneously drive a plurality of application programs installed in an operating system of the host device 100. For example, if the user additionally performs a second application program configured to reproduce music content while performing a first application program configured to surf the Internet (such a command may be input through the touch screen (not illustrated) of the user interface 230 (see FIG. 3) of the display device 200 or through the keyboard (not illustrated) or mouse (not illustrated) of the user interface 230 (see FIG. 3)), the controller 160 may operate the second application program simultaneously with the first application program. Accordingly, the controller 160 may generate a user interface window (i.e., video data) configured to surf the Internet, according to a result of operating the first application program, and sound data, according to a result of operating the second application program, and may control the graphic processor 150 to generate the real-time streaming data that includes the generated video data and sound data. Further, the controller 160 may control the second communication interface 120 to transfer the generated real-time streaming data to the display device 200 via the first wireless communication method.

As described above, the host device 100, according to an embodiment, may transmit and/or receive the video data and the data except for the video data in a separate manner via the plurality of communication methods, and thus the deterioration in performance due to the interferences between the high-speed signal and the low-speed signal may be minimized.

Further, the host device 100, according to an embodiment, may make the constituent elements related to the first wireless communication consume a low amount of power to save the power in an embodiment where the first wireless communication method may not be performed. Further, even in an embodiment where the first wireless communication method may not be operated, the host device 100 may communicate with the display device 200 via the second wireless communication method in which a lower amount of power may be consumed, and may change the operation mode of the host device 100 to correspond to the change of the operation mode of the display device 200.

FIG. 3 is a block diagram illustrating an example of a configuration of the display device 200 as illustrated in FIG. 1.

Referring to FIG. 3, the display device 200 may include a first communication interface 210, a second communication interface 220, a user interface 230, a battery unit 240, a controller 250, and a storage 270.

In an embodiment, the display device 200 may have a plurality of operation modes. The plurality of operation modes may include a normal mode, in which all constituent elements in the display device 200 operate, and a power saving mode, in which the display device 200 may operate with lower power consumption than in the normal mode. In an embodiment, the display device 200 may have only one power saving mode. However, the display device 200 may also include a plurality of power saving modes as operation modes.

The first communication interface 210 is configured to receive data, for example, video data via the first wireless communication method. For example, the first communication interface 210 may receive the video data transmitted through the first communication interface 110 of the host device 100 via a high-speed wireless communication method, such as, for example, WiFi (Wireless LAN), UWB (Ultra WideBand), WiDi (Wireless Display), WiHD (Wireless HD), WHDI (Wireless Home Digital Interface), Miracast, or Wigig (Wireless Gigabit Alliance). In an embodiment, the first communication interface 210 may also receive audio data simultaneously with the video data. The received data, for example, may be HDMI interface type real-time streaming data.

The second communication interface 220 is configured to transmit data, for example, a control command via the second wireless communication method. For example, the second communication interface 220 may transmit a user control command, that may be input through the user interface 230 to be described later, to the second communication interface 120 of the host device 100.

The second communication interface 220 is configured to transmit data, for example, and to receive control data with the host device 100 via the second wireless communication method. In an embodiment, the control data may be data, except for the video data and the audio data, that may be transmitted between the host device 100 and the display device 200, and may include a user control command input from the user on the display device 200 or the host device 100, a device control command that corresponds to the input user control command, status information of the host device 100, and status information of the display device 200. Accordingly, the second communication interface 220 may transmit and receive the status information of the host device 100 and the status information of the display device 200 with the second communication interface 120 of the host device 100 via the second wireless communication method. In an embodiment, the status information, for example, may be information about the operation modes of the host device 100 and the display device 200 or the power supply state (specifically, for example, information about a residual amount of energy in a battery (see FIG. 4)) of the display device 200. The second wireless communication method may be a wireless communication method having a lower power, a lower speed, and a lower capacity than those of the first wireless communication method, and may be, for example, a Bluetooth, Zigbee, or RF communication method.

The user interface 230 may include a plurality of function keys for the user to set or to select various functions supported by the display device 200, and may display various kinds of information provided from the display device 200. The user interface 230 may be implemented as a device in which input and output operations are performed simultaneously, such as, for example, a touch screen (not illustrated), or may be implemented as a combination of an input device, such as, for example, a mouse (not illustrated) or a keyboard (not illustrated), and a display device configured to display videos. In an embodiment, the user interface 230 of the display device 200 may be implemented by a touch screen (not illustrated).

The user interface 230 may display the received video data. For example, the user interface 230 may display the received video data through the first communication interface 210. On the other hand, if data in which the video data and the audio data are combined is or has been received through the first communication interface 210, that is, moving image streaming data is or has been received, the user interface 230 may divide the received moving image streaming data into video streaming data and audio streaming data, may display the video that corresponds to the divided video streaming data, and may output sound that corresponds to the divided audio streaming data. The video streaming data and the audio streaming data may correspond to one content or may be plural result of a plurality of content. That is, the video streaming data may be the output result of an application program related to Internet surfing, and the audio streaming data may be the output result of an application program related to sound source data reproduction.

The user interface 230 may display the status information of the host 100. For example, if the status information, which indicates that the operation mode of the host device 100 has been changed, is or has been received through the second communication interface 220, the user interface 230 may display that the operation mode of the host device 100 has been changed. The user interface 230 may also display that the operation mode of the display device 200 has also been changed according to the change of the operation mode of the host device 100.

The user interface 230 may display a state of a battery (see FIG. 4). For example, the user interface 230 may display status information of the battery (see FIG. 4) (e.g., if the battery (see FIG. 4) is being charged, if not, a current residual amount of energy in the battery (see FIG. 4), information that the residual amount of energy in the battery (see FIG. 4) is less than a predetermined residual amount of energy and thus charging is necessary, and the like).

The battery unit 240 may supply power to the respective constituent elements in the display device 200. For example, the battery unit 240 may include a battery (see FIG. 4) configured to store power and a sensor (not shown) configured to sense the state of the battery (see FIG. 4). Further, the battery unit 240 may provide power according to the operation mode of the display device 200 under the control of the controller 250, to be described later. On the other hand, the battery unit 240 may be charged via a wireless charging method. This will be described later with reference to FIG. 4.

The controller 250 may control of the respective constituent elements of the display device 200. For example, the controller 250 may determine the operation mode of the display device 200. More specifically, for example, if there is not or has not been a user input for a predetermined time or if a job is not or has not been performed for the predetermined time, the controller 250 may determine the operation mode of the display device 200 as the power saving mode. Further, if the status information, which indicates that the operation mode of the host device 100 has been changed to the power saving mode, is or has been received through the second communication interface 220, the controller 250 may determine the operation mode of the display device 200 to be the power saving mode. Additionally, the controller 250 may determine the operation mode of the display device 200 using any combination of the foregoing methods.

On the other hand, if a wakeup command is or has been received from the user through the user interface 230 in the power saving mode, or if the status information, which indicates that the operation mode of the host device 100 has been changed from the power saving mode to the normal mode, is or has been received through the second communication interface 220, the controller 250 may determine the operation mode of the display device 200 to be the normal mode. Additionally, the controller 250 may determine the operation mode of the display device 200 using any combination of the foregoing methods.

Further, the controller 250 may determine the operation mode of the display device 200 as a function of a state of a battery (see FIG. 4) of the display device 200. For example, if the information about the residual amount of energy in the battery (see FIG. 4) of the display device 200 is less than the predetermined residual amount, the controller 250 may determine the operation mode of the display device 200 to be the power saving mode. If the operation mode of the display device 200 is or has been changed to the power saving mode through the above-described determination and then the battery (see FIG. 4) of the display device 200 achieves a charged state, the controller 250 may determine the operation mode of the display device 200 to be the normal mode. Additionally, the controller 250 may determine the operation mode of the display device 200 using any combination of the foregoing methods.

Then, the controller 250 may control the respective constituent elements of the display device 200 to correspond to the determined operation mode. For example, if the operation mode of the display device 200 is or has been changed to the power saving mode, the controller 250 may control the first communication interface 210 and the second communication interface 220 so that the communication with the host device 100 may be performed only via the second wireless communication method. That is, the controller 250 may control the first communication interface 210 not to operate and may control only the second communication interface 220 to operate.

If the operation mode of the display device 200 is or has been changed to the normal mode, the controller 250 may control the respective constituent elements in the display device 200 so that the constituent elements, which do not operate during the power saving mode, wake up.

Further, if the operation mode of the display device 200 is or has been changed, the controller 250 may control the second communication interface 220 so that the changed operation mode of the display device 200 may be transmitted to the host device 100 as the status information.

Further, if the video data is or has been received through the first communication interface 210, the controller 250 may control the first communication interface 210 and the user interface 230 to display the received video data on the user interface 230.

Then, if the user control command is or has been input through the user interface 230, the controller 250 may control the second communication interface 120 to transfer the input user control command to the host device 100 as the control data.

The storage 270 may store a program for driving the display device 200. For example, the storage 270 may store a program that may be a set of various commands that may be required to drive the display device 200. In an embodiment, the program may include not only application programs configured to provide specific services, but also an operating program configured to drive the application programs.

As described above, the display device 200, according to an embodiment, may transmit and/or receive the video data and/or the data except for the video data in a separate manner via the plurality of communication methods, and thus the deterioration in performance due to the interferences between the high-speed signal and the low-speed signal may be minimized.

Further, the display device 200, according to an embodiment, may make the constituent elements related to the first wireless communication consume a low amount of power to save the power in an embodiment where the first wireless communication method may not be performed. Further, even in an embodiment where the first wireless communication method may not be operated, the display device 200 may communicate with the host device 100 via the second wireless communication method in which a lower amount of power may be consumed, and may change the operation mode of the display device 200 to correspond to the change of the operation mode of the host device 100.

FIG. 4 is a diagram illustrating an example of an operation of an electronic system according to an embodiment of the inventive concept.

Referring to FIG. 4, the electronic system 1000 may include the host device 100 and the display device 200, and the host device 100 and the display device 200 may transmit and receive various kinds of data via the first wireless communication method and the second wireless communication method. For example, the video data that may generated in the host device 100 may be transmitted to the display device 200 via the first wireless communication method at a high speed, a high capacity, and a high power, and the control data and status information, except for the image data, may be transmitted and received between the host device 100 and the display device 200 via the second wireless communication method at a low speed, a low capacity, and a low power.

The host device 100 may have a plurality of the operation modes, and may include a first operation configuration, which operates only in the normal mode, and a second operation configuration, which operates even in the power saving mode.

The first operation configuration may operate only in the normal mode, and may include the first communication interface 110, the graphic processor 150, a controller 162, and a chipset 163. Since the first communication interface 110 and the graphic processor 150 may be configured in the same manner as was described above with reference to FIG. 2, further explanation thereof is omitted.

The second operation configuration may operate even in the power saving mode, and may include the second communication interface 120, a main microcomputer (main micom) 161, a sub-microcomputer (sub-micom) 164, a first function unit 122, a second function unit 123, and a third function unit 124. Since the second communication interface 120 may be configured in the same as manner as was described above with reference to FIG. 2, further explanation thereof is omitted.

The controller 160 may be implemented by the main microcomputer (main micom) 161, the controller 162, the chipset 163, and the sub-microcomputer (sub-micom) 164. Since the functions of the main microcomputer 161, the controller 162, and the chipset 163 in an electronic device are well known, a detailed description thereof is omitted.

The sub-microcomputer 164 may be configured to control the operation of the second communication interface 120. For example, the sub-microcomputer 164 may control the second communication interface 120 to transmit and receive the status information with the display device 200 in the normal mode and in the power saving mode.

Further, the sub-microcomputer 164 may control the function that corresponds to the status information that may be received through the second communication interface 120 in the power saving mode. For example, if the status information, which indicates that the display device 200 is or has been changed to the normal mode, is or has been received through the second communication interface 120 in the power saving mode, the sub-microcomputer 164 may change the operation mode of the host device 100 to the normal mode using, for example, the functions of the function units 122, 123, and 124, to be described later. Further, if a change command to the normal mode is or has been input from the user through a button (not illustrated) provided on the host device 100 in the power saving mode, the sub-microcomputer 164 may change the operation mode of the host device 100 to the normal mode using, for example, the functions of the function units 122, 123, and 124, to be described later, and may control the second communication interface 120 to transmit the status information, which indicates that the operation mode of the host device 100 is or has been changed to the normal mode.

The plurality of the function units 122, 123, and 124 may be configured to perform specific functions under the control of the sub-microcomputer 164, and may be configured to perform, for example, a function of receiving an input of a user command (power-on command, power-off command, and power saving mode change command), a function of transmitting the status information of the host device 100 to the display device 200, a function of receiving the status information of the display device 200, and a function of changing the operation mode of the host device 100.

Although in an embodiment the main microcomputer 161 may operate even in the power saving mode, the main microcomputer 161 may also be implemented as the first operation configuration, which operates only in the normal mode.

The display device 200 may have a plurality of operation modes, and may include a third operation configuration, which may operate only in the normal mode, and a fourth operation configuration, which may operate in the power saving mode.

The third operation configuration may operate only in the normal mode, and may include the first communication interface 210, user interfaces 231 and 232, and a controller 252. Since the first communication interface 210 and the user interfaces 231 and 232 may be configured in the same manner as was described above with reference to FIG. 3, a detailed description thereof is omitted.

The fourth operation configuration may operate even in the power saving mode, and may include the second communication interface 220, a main microcomputer (or main micom) 251, a sub-microcomputer (or sub-micom) 253, a first function unit 222, a second function unit 223, and the battery unit 240. Since the second communication interface 220 and the battery unit 240 may be configured in the same manner as was described above with reference to FIG. 3, a detailed explanation thereof is omitted.

The controller 250 may be implemented by the main microcomputer 251, the controller 252, and the sub-microcomputer 253. Since the functions of the main microcomputer 251 and the controller 252 in an electronic device are well known, a detailed description thereof is omitted.

The controller 250 may not be configured in the same manner as a general CPU on an electronic device. That is, the host device 100 may perform an arithmetic operation according to an application program in the electronic system 1000, and the display device 200 may receive and display or output video data or data in which the video data and the audio data are combined according to a result of the arithmetic operation. However, in the electronic system 1000, according to an embodiment, the display device 200 may receive the user control command and may transfer the user control command to the host device 100. In an embodiment, the controller 250 may perform an operation of displaying the video data transferred from the host device 100 and may perform a function of transferring the user control command input through the touch screen (not illustrated) to the host device 100. Although in an embodiment the display device 200 may not have a separate operational function, the inventive concept is not limited thereto, and the display device 200 may be implemented to operate independently without being subordinate to the host device 100. That is, a CPU and an operating system may be separately provided in the display device.

The sub-microcomputer 253 may be configured to control the operation of the second communication interface 220. For example, the sub-microcomputer 253 may control the second communication interface 220 to transmit and receive the status information with the host device 100 in the normal mode and in the power saving mode.

Further, the sub-microcomputer 253 may control the function that corresponds to the status information that may be received through the second communication interface 220 in the power saving mode. For example, if the status information, which indicates that the host device 100 is or has been changed to the normal mode, is or has been received through the second communication interface 220 in the power saving mode, the sub-microcomputer 253 may change the operation mode of the display device 200 to the normal mode using, for example, the functions of the function units 222 and 223, to be described later. Further, if a change command to the normal mode is or has been input from the user through a button (not shown) provided on the display device 200 in the power saving mode, the sub-microcomputer 253 may change the operation mode of the display device 200 to the normal mode using, for example, the functions of the function units 222 and 223, to be described later, and may control the second communication interface 220 to transmit the status information, which indicates that the operation mode of the display device 200 is or has been changed to the normal mode.

The plurality of the function units 222 and 223 may be configured to perform specific functions under the control of the sub-microcomputer 253, and may be configured to perform, for example, a function of receiving an input of a user command (power-on command, power-off command, and power saving mode change command), a function of transmitting the status information of the display device 200 to the host device 100, a function of receiving the status information of the host device 100, and a function of changing the operation mode of the display device 200.

Although in an embodiment the main microcomputer 251 may operate even in the power saving mode, the main microcomputer 251 may also be implemented as the third operation configuration, which operates only in the normal mode.

On the other hand, the display device, according to an embodiment, may be a portable device, and thus may include a battery 241. The battery 241 may be charged by a wired power connector and by wireless charging technology. Since the wired method is a well known technology, a detailed description thereof is omitted, and the wireless charging method is described below.

In the case of the wireless charging method, the host device 100 may further include a power signal transmitter 170.

The power signal transmitter 170 transmits a power signal for wirelessly charging the power of the display device 200. For example, the power signal transmitter 170 may transmit the power signal to charge the battery 241 of the display device 200 using at least one of electromagnetic induction technology using RFID (Radio Frequency Identification), radio wave reception technology using radio waves, and electromagnetic resonance technology.

In an embodiment, the controller 160 may control the power signal transmitter 170 in consideration of the distance between the host device 100 and the display device 200 and the state of the battery 241 of the display device 200. For example, if it is or has been determined that the state of the battery 241 of the display device 200, which may be received through the second communication interface 120, may be a state where charging the battery 241 may be necessary, the controller 160 may control the power signal transmitter 170 to transmit the power signal to charge the battery 241 of the display device 200. In contrast, if the distance between the host device 100 and the display device 200 is or has been determined to be longer than a predetermined distance, the controller 160 may control the power signal transmitter 170 so that the power signal may not be transmitted. In an embodiment, the controller 160 may control the graphic processor 150 to generate the video data included in a message so that the message, which includes a notification that the distance between the host device 100 and the display device 200 should be closer for charging, may be displayed on the display device 200.

In an embodiment of the wireless charging method, the display device 200 may further include a power signal receiver 260.

The power signal receiver 260 may receive the power signal from the host device 100, and may charge the battery 241 of the battery unit 240 using the received power signal. For example, the power signal receiver 260 may receive the power signal transmitted from the host device 100 using at least one of electromagnetic induction technology using RFID (Radio Frequency Identification), radio wave reception technology using radio waves, and electromagnetic resonance technology. The power signal receiver 260 may charge the battery 241 using the received power signal.

In an embodiment, the controller 250 may control the power signal receiver 260 in consideration of a state of the battery 241 of the display device 200. For example, if the battery 241 in the display device 200 is in a fully charged state, the controller 250 may control the power signal receiver 260 to stop the battery charging, and may control the second communication interface 220 to transmit the control data to stop the transmission of the power signal to the host device 100.

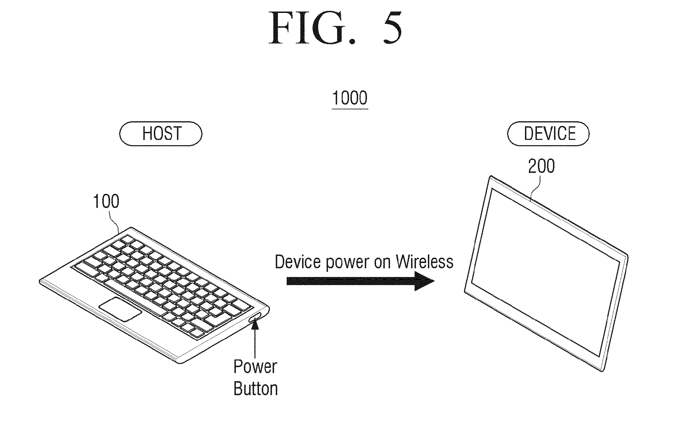

FIGS. 5 to 9 are views illustrating an example of an operation of the electronic system 1000 according to an embodiment of the inventive concept.

Referring to FIG. 5, if a user may press a power button, for example, through the user interface 130 of the host device 100, then the host device 100 may be in a power-on state. In an embodiment, the second communication interface 120 of the host device 100 may transmit the status information, which indicates that the host device 100 is in the power-on state, to the display device 200. Accordingly, the display device 200 may be in the power-on state depending on the received status information.

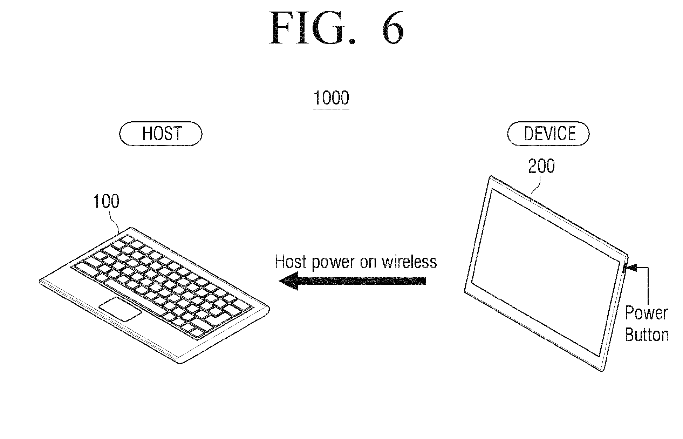

Referring to FIG. 6, if a user may press a power button, for example, through the user interface 230 of the display device 200, then the display device 200 may be in a power-on state. In an embodiment, the second communication interface 220 of the display device 200 may transmit the status information, which indicates that the display device 200 is in the power-on state, to the host device 100. Accordingly, the host device 100 may be in the power-on state depending on the received status information.

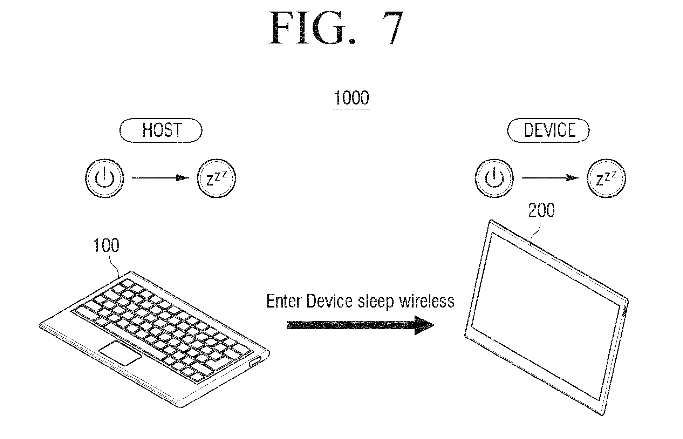

Referring to FIG. 7, if the user does not input a control command within a predetermined time, the host device 100 may determine to change an operation mode of the host device 100 to a power saving mode and the operation mode of the host device 100 may be changed to the power saving mode. At this time, the host device 100 transmits the change of the operation mode of the host device 100 to the display device 200 as status information, and the display device 200 may change its operation mode to the power saving mode.

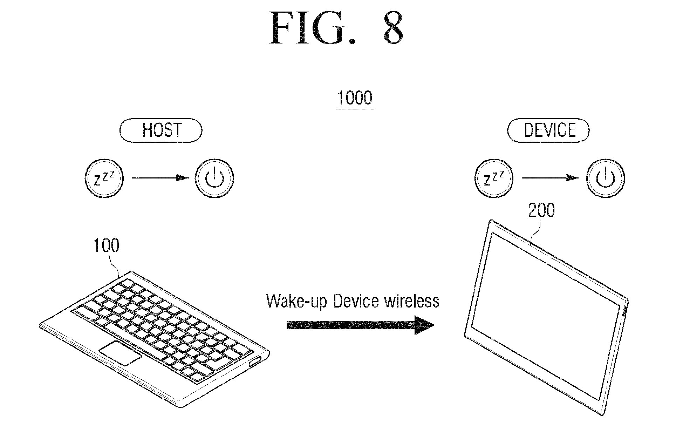

Referring to FIG. 8, if the operation mode of the host device 100 is or has been changed from the power saving mode to the normal mode by the control command, the second communication interface 120 of the host device 100 transmits the control data, configured to notify that the operation mode of the host device 100 is or has been changed to the normal mode, to the display device 200. Accordingly, the display device 200 may change its operation mode from the power saving mode to the normal mode according to the received control data.

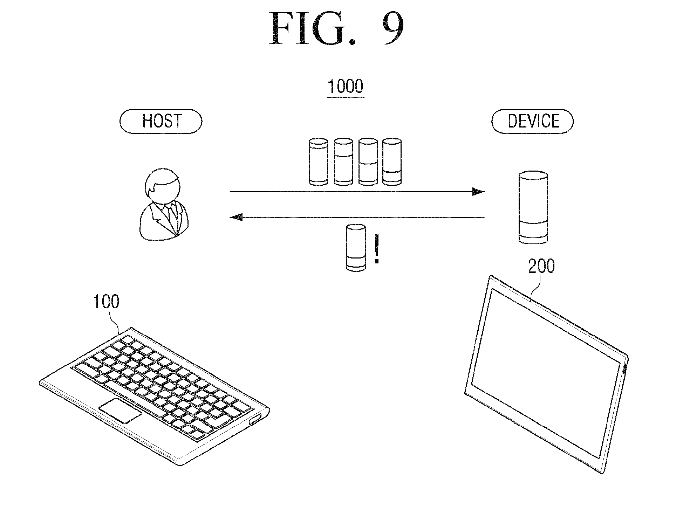

Referring to FIG. 9, the display device 200 may provide a state of the battery 241 mounted in the display device 200 to the host device 100 as the status information, and the host device 200 may perform various operations according to the state of the battery 241 of the display device 200. For example, if a residual amount of energy in the battery 241 of the display device 200 is equal to or less than a predetermined residual amount, the display device 200 may change the operation mode of the host 100 to the power saving mode.

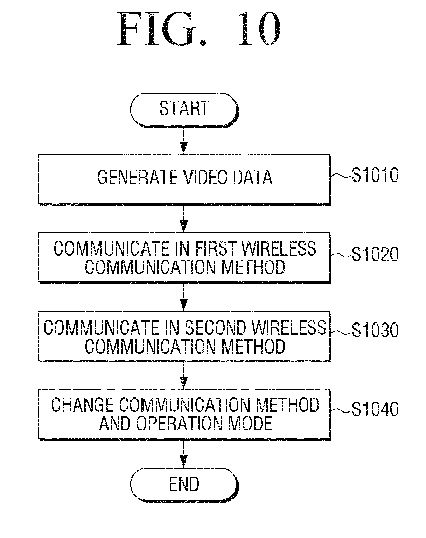

FIG. 10 is a flowchart illustrating an example of a control operation of a host device according to an embodiment of the inventive concept.

Referring to FIG. 10, video data to be displayed on a display device may be generated (S1010). For example, the host device 100 may generate the video data to be displayed on the display device 200 as real-time streaming data. In an embodiment, the real-time streaming data may include audio data.

The video data may be transmitted to the display device via a first wireless communication method (S1020). In an embodiment, the first wireless communication method may be a high-speed wireless communication method, such as, for example, WiFi (Wireless LAN), UWB (Ultra WideBand), WiDi (Wireless Display), WiHD (Wireless HD), WHDI (Wireless Home Digital Interface), Miracast, or Wigig (Wireless Gigabit Alliance).

During transmission of the video data to the display device, the host device may transmit control data to the display device via a second wireless communication method, may receive the control data from the display device via the second wireless communication method, or both (S1030). In an embodiment, the second wireless communication method may be a wireless communication method having a lower power, a lower speed, and a lower capacity than those of the first wireless communication method, and may be, for example, Bluetooth, Zigbee, or RF communication method. The control data may be data, except for the video data and the audio data, which may be transmitted, for example, between the host device 100 and the display device 200, and may include a user control command input from the user on the display device 200 or the host device 100, a device control command that corresponds to the input user control command, status information of the host device, and status information of the display device 200.

If the operation mode of the host device is or has been changed to the power saving mode during the above-described operation, the operation states of the first wireless communication method and the second wireless communication method may be controlled so that communication with the display device is performed only via the second wireless communication method (S1040). For example, the operation mode of the host device 100 may be determined in consideration of whether the user control command is or has been input, whether to perform a job, and the operation mode of the display device 200. If the operation mode of the host device 100 is or has been determined to be the power saving mode, the operation state of the first wireless communication method may be inactivated so that communication with the display device 200 may be performed only via the second wireless communication method.

Accordingly, the method of controlling the host device according to an embodiment may transmit and receive the video data and the data except for the video data in a separate manner via a plurality of wireless communication methods, and thus the deterioration in performance due to interferences between the high-speed signal and the low-speed signal may be minimized. Further, in an embodiment where the first wireless communication method may not be performed, the constituent elements related to the first wireless communication method may be controlled to consume less power in order to save energy. Further, even if the first wireless communication method may not be performed, communication with the display device may be performed via the second wireless communication method, which consumes less power, and thus the operation mode of the host device may be changed to correspond to the change of the operation mode of the display device. The method of controlling the host device as illustrated in FIG. 10 may be executed on a host device configured in a similar manner as was described above with reference to FIG. 2, or may be executed on a host device having a different configuration.

Further, a method of controlling the host device as described above may be implemented by a program (or application) that includes an executable algorithm that may be executed in a computer, and the above-described program may be stored in a non-transitory computer readable medium.

The non-transitory computer readable medium includes a device-readable medium that may not store data for a short time, such as a register, a cache, and a memory, but rather may semi-permanently store the data. For example, the above-described various applications or programs may be provided and stored in the non-transitory computer readable medium, such as, for example, a CD, a DVD, a hard disk, a Blu-ray disk, a USB, a memory card, and a ROM.

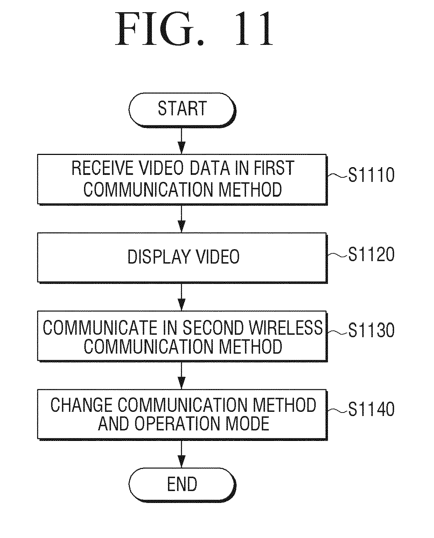

FIG. 11 is a flowchart illustrating an example of a control operation of a display device according to an embodiment of the inventive concept.

Referring to FIG. 11, video data may received from the host device via a first wireless communication method (S1110). In an embodiment, the first wireless communication method may be a high-speed wireless communication method, such as, for example, WiFi (Wireless LAN), UWB (Ultra WideBand), WiDi (Wireless Display), WiHD (Wireless HD), WHDI (Wireless Home Digital Interface), Miracast, or Wigig (Wireless Gigabit Alliance). Audio data may be received concurrently with the video data via the first wireless communication method.

During reception of the video data via the first wireless communication method, the display device may transmit control data to the host device via the first wireless communication method, may receive the control data from the host device via the first wireless communication method, or both (S1120). In an embodiment, the second wireless communication method may be a wireless communication method having a lower power, a lower speed, and a lower capacity than those of the first wireless communication method, and may be, for example, Bluetooth, Zigbee, or RF communication method. Further, status information may be information about operation modes of the host device and the display device, a state of the power supply (specifically, for example, information about a residual amount of energy in a battery) of the display device, or the like.

Further, the video data that is or has been received via the first communication interface unit may be displayed (S1130). For example, the received real-time streaming video data may be displayed on a user interface of the display device. On the other hand, if both the audio data and the video data are or have been received, the received data may be divided into the audio data and the video data, and the separated video data may be displayed, and the separated audio data may be output as sound.

If the operation mode of the display device is the power saving mode, the operation states of the first wireless communication method and the second wireless communication method may be controlled so that the communication with the display device is performed only via the second wireless communication method (S1140). For example, the operation mode of the display device 200 may be determined in consideration of whether the user control command is or has been input, whether to perform a job, and the operation mode of the host device 100. If the operation mode of the display device 200 is or has been determined to be the power saving mode, the operation state of the first wireless communication method may be inactivated so that communication with the host device 100 may be performed only via the second wireless communication method.

Accordingly, the method of controlling the display device according to an embodiment may transmit and/or receive the video data and/or the data except for the video data in a separate manner via a plurality of wireless communication methods, and thus the deterioration in performance due to interferences between the high-speed signal and the low-speed signal may be minimized. Further, in an embodiment where the first wireless communication may not be performed, the constituent elements related to the first wireless communication method may be controlled to consume less power in order to save energy. Further, even if the first wireless communication method may not be performed, communication with the host device may be performed via the second wireless communication method,which consumes less power, and thus the operation mode of the display device may be changed to correspond to the change of the operation mode of the host device. The method of controlling the display device as illustrated in FIG. 11 may be executed on a display device configured in the same manner as was described above with reference to FIG. 3, or may be executed on a display device having a different configuration.

Further, the method of controlling the display device as described above may be implemented by a program (or application) that includes an executable algorithm that may be executed in a computer, and the above-described program may be stored in a non-transitory computer readable medium.

The present invention can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can be transmitted through carrier waves or signals (e.g., wired or wireless data transmission through the Internet). Also, functional programs, codes, and code segments to accomplish the present invention can be easily construed by programmers skilled in the art to which the present invention pertains.

Although a few embodiments of the present invention have been shown and described, it will be appreciated by those skilled in the art that changes may be made in these embodiments without departing from the principles of the invention, the scope of which is defined in the appended claims.

## Claims

1. A host device wirelessly connectable to a display device having a touch screen, comprising:
a graphic processor configured to generate video data to be displayed on the display device;
a first communication interface configured to transmit the video data to the display device via a first wireless communication method; and
a second communication interface configured to receive at least one of control information, which corresponds to a control command input through the touch screen, and status information of the display device from the display device via a second wireless communication method, and to transmit the status information of the host device to the display device via the second wireless communication method.

2. The host device as claimed in claim 1, wherein the host device includes:
a plurality of operation modes; and
a controller configured to control the first communication interface and the second communication interface so as to perform communication with the display device only via the second wireless communication method if an operation mode of the plurality of operation modes is a power saving mode.

3. The host device as claimed in claim 2, wherein the controller is configured to control the second communication interface such that the status information that corresponds to a changed operation mode of the host device is transmitted to the display device via the second wireless communication method if the operation mode of the host device is or has been changed.

4. The host device as claimed in claim 2 or 3, wherein the controller is configured to change the operation mode of the host device to correspond to a changed operation mode of the display device if the status information, which indicates that the operation mode of the display device has been changed, is or has been received from the display device via the second wireless communication method.

5. The host device as claimed in claim 2, 3 or 4, wherein the status information of the display device includes information about a residual amount of energy of a battery of the display device, and
the controller is configured to change the operation mode of the host device to correspond to the information about the residual amount of energy if the information about the residual amount of energy is or has been received from the display device via the second wireless communication method.

6. The host device as claimed in any one of the preceding claims, wherein the first communication interface is configured to transmit the video data and audio data that corresponds to the video data to the display device.

7. The host device as claimed in any one of the preceding claims, wherein the first wireless communication method is at least one of WiFi (Wireless LAN), UWB (Ultra WideBand), WiDi (Wireless Display), WiHD (Wireless HD), WHDI (Wireless Home Digital Interface), Miracast, and Wigig (Wireless Gigabit Alliance).

8. The host device as claimed in any one of the preceding claims, wherein the second wireless communication method is a communication method that consumes less power than the first wireless communication method.

9. The host device as claimed in any one of the preceding claims, wherein the second wireless communication method is at least one of Bluetooth, Zigbee, and RF communication.

10. The host device as claimed in any one of the preceding claims, further comprising a power signal transmitter configured to transmit a power signal to wirelessly charge the display device.

11. A system comprising a host device as claimed in any one of the preceding claims and a display device, the display device comprising:
a first communication interface configured to receive video data from the host device via a first wireless communication method;
a user interface having a touch screen and configured to display the video data received through the first communication interface; and
a second communication interface configured to transmit at least one of control information, which corresponds to a control command input through the touch screen, and status information of the display device to the host device via a second wireless communication method, and to receive the status information of the host device from the host device via the second wireless communication method.

12. The system as claimed in claim 11, wherein the display device includes a plurality of operation modes, and
further comprises a controller configured to control the first communication interface and the second communication interface so as to perform communication with the host device only via the second wireless communication method if an operation mode of the plurality of operation modes is a power saving mode.

13. The system as claimed in claim 12, wherein the controller of the display device is configured to control the second communication interface so that the status information that corresponds to a changed operation mode of the display device is transmitted to the host device via the second wireless communication method if the operation mode of the display device is or has been changed.

14. The system as claimed in claim 12, wherein the controller of the display device is configured to change the operation mode of the display device to correspond to a changed operation mode of the host device if the status information, which indicates that the operation mode of the host device has been changed, is or has been received from the host device via the second wireless communication method.

15. A method of controlling a host device wirelessly connectable to a display device having a touch screen, comprising:
generating video data to be displayed on the display device;
transmitting the video data to the display device via a first wireless communication method; and
receiving at least one of control information, which corresponds to a control command input through the touch screen, and status information of the display device from the display device via a second wireless communication method, wherein the transmitting and the receiving are concurrent.
